# EUROPÄISCHE PATENTSCHRIFT

(11) **EP 4 121 986 B1**
(45) Veröffentlichungstag und Bekanntmachung des Hinweises auf die Patenterteilung: **14.05.2025**
(21) Anmeldenummer: 21712815.6
(22) Anmeldetag: 17.03.2021
(51) Int. Cl.: H01B 1/16, H01B 1/08, C01F 7/16, C04B 35/44, C04B 35/626, C22C 1/051, C22C 29/12

(54) **ELEKTRONEN EMITTIERENDE KERAMIK**
ELECTRON-EMITTING CERAMIC
CÉRAMIQUE À ÉMISSION ÉLECTRONIQUE

(30) Priorität: 20.03.2020 DE 102020107795
(43) Veröffentlichungstag der Anmeldung: 25.01.2023
(73) Patentinhaber: Fraunhofer-Gesellschaft zur Förderung der angewandten Forschung e.V., 80686 München (DE); Technische Universität Dresden, 01069 Dresden (DE)
(72) Erfinder: WÄTZIG, Katja, 01277 Dresden (DE); TAJMAR, Martin, 01324 Dresden (DE); DROBNY, Christian, 04808 Wurzen (DE)
(74) Vertreter: Rauschenbach, Marion
(86) Internationale Anmeldenummer: PCT/EP2021/056852
(87) Internationale Veröffentlichungsnummer: WO 2021/185922

(56) Entgegenhaltungen:
- EP-A1- 2 708 521
- EP-A1- 2 865 648
- EP-A1- 2 865 782
- EP-A1- 3 489 197
- EP-B1- 2 708 521
- WO-A1-2014/176603
- US-A1- 2015 184 282

## Beschreibung

Die Erfindung bezieht sich auf das Gebiet der Keramik und betrifft Elektronen emittierende Keramiken, wie sie beispielsweise als Kathodenmaterial für Elektronenemissionen in Raumfahrtsystemen, wie Satellitenantrieben, für thermionische Konverter oder Feldemission-Displays eingesetzt werden können.

Aus der EP 165164 B1 ist eine elektronenleitende 12CaO·7Al₂O₃-Verbindung (C12A7) und ein Compound des gleichen Typs daraus und ein Verfahren zu ihrer Herstellung bekannt.

Eine Mischung aus den Ausgangsstoffen Al(OH)₃ und CaCO₃ wird entweder gepresst und mittels Alkali- oder Erdalkalidämpfen zwischen 600 - 800 °C für 4 - 240 h behandelt oder gepresst und zwischen 1550 und 1650 °C unter reduzierender Atmosphäre geschmolzen und langsam abgekühlt. Das entstandene Compound weist eine sehr gute elektrische Leitfähigkeit von > 10⁻⁴ S/cm auf.

Durch diese Herstellung ist die Verbindung C12A7 aus den Ausgangsstoffen in einer Käfigstruktur kristallisiert und in dieser käfigartigen Netzwerkstruktur ist ein Teil des Sauerstoffs als freier Sauerstoff vorhanden, so dass eine Struktur [Ca₂₄Al₂₈O₆₄]⁴⁺ 2O²⁻ entstand. Durch die Herstellung unter reduzierenden Bedingungen wird der freie Sauerstoff gegen freie Elektronen ausgetauscht, so dass ein Material aus [Ca₂₄Al₂₈O₆₄]⁴⁺4e⁻ entstanden ist, welches ein Elektrid ist.

Elektride sind chemische Verbindungen, in denen die negative Ladung nicht als Anion sondern als freies Elektron vorliegt (Wikipedia, Stichwort Elektrid).

Weiter ist aus der WO13191212 A1 ein elektrolumineszierendes Element bekannt, welches hergestellt worden ist, indem ein Substrat mittels CVD unter einem Sauerstoffpartialdruck von < 0,1 Pa beschichtet wird, wozu ein Target aus kristallinem C12A7-Elektrid eingesetzt wird. Das elektrolumineszierende Element besteht aus einer Anode, einer licht-emittierenden Schicht und einer Kathode. Zwischen der licht-emittierenden Schicht und der Kathode ist eine elektronentransportierende Schicht angeordnet, die eine Dünnschicht aus C12A7-Elektrid ist.

Aus der WO 2007/060890 A1 ist eine metallische elektronenleitende C12A7-Verbindung und ein Verfahren zu ihrer Herstellung bekannt.

Gemäß der US3515932A ist eine Hohlkathode in einer Kammer mit einer Düse bekannt, bei der die Wandung der Kammer mit einer Nickelschicht beschichtet ist, wobei das Nickel verschiedene Oxide eingekapselt enthält. Durch einen Heizer wird in der Kammer ein Plasma erzeugt, welches aus der Düse ausströmt und auf die davor angeordnete Anode trifft. Dadurch wird eine gasförmige Verbindung, eine Plasmabrücke, zwischen Anode und Kathode erzeugt. Als Oxide, die in Nickel eingekapselt sind, können Barium-, Strontium- und Kalziumoxid verwendet werden. Durch die Reduzierung der Austrittsarbeit der Elektronen von der Schichtoberfläche in der Kammer werden niedrigere Temperaturen bei der thermischen Elektronenemission erzielt.

Gemäß der EP0200035 B1 ist eine Elektronenstrahlvorrichtung bekannt, die aus einer Kammer besteht, deren Innenfläche aus einem Material besteht, welches unter Beschuss mit Ionen aus einem eintretenden ionisierbaren Gas über eine hohen sekundären Elektronenemissionskoeffizienten verfügt, so dass, wenn der Innenraum mit einem ionisierbaren Gasplasma gefüllte wird, unter Beschuss mit den Ionen durch sekundäre Emissionseffekte energiereiche Elektronen von der Innenfläche emittiert werden, und energiearme Elektronen, die durch Kollision zwischen den energiereichen Elektronen und den Gasionen freigesetzt werden, durch die Apparatur emittiert werden.

Nach der WO 29014/176603 A1 ist eine C12A7-Elektrid-Hohlkathode mit niedriger Austrittsarbeit zur Elektronenemission bekannt.

Weiter ist aus der US 10,002,738 B1 ein Verfahren zur Herstellung einer Hohlkathode aus einer Emitterkeramik (BaO-CaO-Al₂O₃) bekannt, die aus einem porösen Komposit aus mindestens 50 Ma.-% Refraktärmetallen besteht, die homogen verteilt in einer Keramik vorliegen, wobei die Keramik BaO, CaO und mindestens Al₂O₃, SmO oder MgO enthält.

Weiterhin ist nach T.Yoshizumi et al: Appl. Phys. Express 6 (2013) 015802 ein thermionisches Kathodenmaterial bekannt, welches aus C12A7-Elektrid und metallischem Ti im Verhältnis 70 : 30 Vol.-% (C12A7 : Ti) besteht. Dieses Material weist bessere Eigenschaften in Bezug auf die Duktilität und elektrische Leitfähigkeit auf.

Ebenfalls bekannt ist aus der US 10002738 B ein Verfahren zur Herstellung einer Hohlkathode aus einer Emitterkeramik (BaO-CaO-Al₂O₃), die aus einem porösen Komposit aus mindestens 50 Ma.-% Refraktärmetallen besteht, die homogen verteilt in einer Keramik vorliegen, wobei die Keramik BaO, CaO und mindestens Al₂O₃, SmO oder MgO enthält.

Nachteile der bekannten C12A7-Elektridmaterialien sind, dass aufgrund ihrer schlechten Wärmeleitfähigkeit das Material nur mangelhaft durchwärmt wird und daher thermische Spannungen auftreten, die zu Rissen im Material führen. Damit wird auch eine kontinuierliche Elektronenemission verhindert und die Langzeitstabilität der Materialien verschlechtert.

Die Aufgabe der vorliegenden Erfindung besteht in der Angabe einer Elektronen emittierenden Keramik, die eine verbesserte Temperaturleitfähigkeit, elektrische Leitfähigkeit und Langzeitstabilität bei gleichzeitig kontinuierlicher Elektronenemission aufweist.

Die Aufgabe wird durch die in den Patentansprüchen angegebene Erfindung gelöst. Vorteilhafte Ausgestaltungen sind Gegenstand der Unteransprüche, wobei die Erfindung auch Kombinationen der einzelnen abhängigen Patentansprüche im Sinne einer Und-Verknüpfung miteinschließt, solange sie sich nicht gegenseitig ausschließen.

Die Elektronen emittierende Keramik enthält mindestens > 70 Vol-% der Verbindung [Ca₂₄Al₂₈O₆₄]⁴⁺(4e⁻) (genannt C12A7-Elektrid) und einen Anteil an Zr, Hf, V, Nb, Ta, Cr, Mo, W, Mn, Re, Fe, Ru, Os, Ni, Pd, Pt, Cu, Ag, Au, Zn, Cd, In, Sn, Sb, Te, TI, Pb oder Bi als Metall einzeln oder als Mischung oder Verbindung oder Legierung dieser Metalle untereinander und/oder mit Ti, wobei der Anteil an den Metallen zwischen > 0 und < 30 Vol.-% liegt, und die Keramik eine Dichte von mindestens 85 % der theoretischen Dichte der Keramik aufweist und die Keramik 0 bis maximal 10 Vol.-% herstellungsbedingte Verunreinigungen, Dotierungen, Hilfsstoffe und/oder Zusätze enthält.

Vorteilhafterweise ist bei der Elektronen emittierenden Keramik 70 bis 90 Vol-%, noch vorteilhafterweise 75 bis 90 Vol-%, der Verbindung [Ca₂₄Al₂₈O₆₄]⁴⁺(4e⁻) (genannt C12A7-Elektrid) in der Keramik vorhanden.

Weiterhin vorteilhafterweise ist bei der Elektronen emittierenden Keramik 5 bis < 30 Vol.-%, noch vorteilhafterweise 5 bis 20 Vol.-%, und noch vorteilhafterweise 10 bis 15 Vol.-%, an Metallen vorhanden.

Ebenfalls vorteilhafterweise ist bei der Elektronen emittierenden Keramik ein Perkolationsnetzwerk der Metalle ausgebildet.

Vorteilhaft ist es auch, wenn bei der Elektronen emittierenden Keramik die Dichte der Keramik > 95 % der theoretischen Dichte der Keramik beträgt.

Weiterhin vorteilhaft ist es, wenn bei der Elektronen emittierende Keramik als Metall inerte Metalle, noch vorteilhafterweise Mo, W, Nb, Ta, Re, Au, Pt, Pd. vorhanden sind.

Ebenfalls vorteilhaft ist es, wenn bei der Elektronen emittierenden Keramik als Metall einzelne Metalle oder Legierungen von Metallen vorhanden sind.

Und auch vorteilhaft ist es, wenn bei der Elektronen emittierenden Keramik als herstellungsbedingte Verunreinigungen, Dotierungen, Hilfsstoffe und/oder Zusätze Erdalkalielemente, wie Sr und/oder Ba vorhanden sind.

Mit der erfindungsgemäßen Keramik ist es erstmals möglich, eine solche Keramik anzugeben, die eine verbesserte Temperaturleitfähigkeit und Langzeitstabilität bei gleichzeitig kontinuierlicher Elektronenemission aufweist, und ein einfaches und kostengünstiges Verfahren zur Herstellung einer solchen Keramik.

Erreicht wird dies durch eine Elektronen emittierende Keramik, die aus mindestens > 70 Vol-% der Verbindung [Ca₂₄Al₂₈O₆₄]⁴⁺(4e⁻) (genannt C12A7-Elektrid)besteht.

Die Verbindung C12A7 ist die Sauerstoff-leitende Verbindung 12CaO·7Al₂O₃ oder [Ca₂₄Al₂₈O₆₄]⁴⁺ 2O²⁻.

C12A7-Elektrid ist die elektronenleitende Verbindung [Ca₂₄Al₂₈O₆₄]⁴⁺(4e⁻).

Vorteilhafterweise sind 70 - 90 Vol-%, noch vorteilhafterweise 75 - 90 Vol-% der Verbindung [Ca₂₄Al₂₈O₆₄]⁴⁺(4e⁻) (genannt C12A7-Elektrid) in der Keramik vorhanden.

Weiterhin sind als zwingender Bestandteil der erfindungsgemäßen Elektronen emittierenden Keramik Zr, Hf, V, Nb, Ta, Cr, Mo, W, Mn, Re, Fe, Ru, Os, Ni, Pd, Pt, Cu, Ag, Au, Zn, Cd, In, Sn, Sb, Te, TI, Pb oder Bi als Metall einzeln oder als Mischung oder Verbindung oder Legierung dieser Metalle untereinander und/oder mit Ti vorhanden.

Sofern nachfolgend bei der erfindungsgemäßen Lösung von Metallen gesprochen wird, sollen darunter immer Zr, Hf, V, Nb, Ta, Cr, Mo, W, Mn, Re, Fe, Ru, Os, Ni, Pd, Pt, Cu, Ag, Au, Zn, Cd, In, Sn, Sb, Te, TI, Pb oder Bi als Metall einzeln oder als Mischung oder Verbindung oder Legierung dieser Metalle untereinander und/oder mit Ti verstanden werden.

Diese zwingend vorhandenen Metalle in der erfindungsgemäßen Elektronen emittierenden Keramik sind erfindungsgemäß in einem Anteil zwischen > 0 und < 30 Vol.-% vorhanden.

Vorteilhafterweise sind diese Metalle in einem Anteil von mindestens 5 Vol.-% bis < 30 Vol.-%, vorteilhafterweise 5 bis 20 Vol.-%, noch vorteilhafterweise 10 bis 15 Vol.-%, vorhanden.

Von besonderer erfindungsgemäßer Bedeutung ist, dass in der erfindungsgemäßen Elektronen emittierenden Keramik einerseits ein solcher Anteil an Metallen vorhanden ist, der zur Ausbildung eines Perkolationsnetzwerkes der Metalle führt, andererseits aber weiterhin ein möglichst geringer Anteil an Metallen in der erfindungsgemäßen Elektronen emittierenden Keramik vorhanden ist.

Sofern bei den erfindungsgemäßen Elektronen emittierenden Keramiken eine Perkolationsgrenze oder Perkolationsschwelle für die Ausbildung eines Perkolationsnetzwerkes durch die Metalle ermittelt werden kann, soll der Anteil an Metallen in der erfindungsgemäßen Elektronen emittierenden Keramik den notwendigen Anteil zum Erreichen der Perkolationsgrenze oder Perkolationsschwelle um maximal 10 Vol-.%, vorteilhafterweise um maximal 5 Vol-% überschreiten.

Die erfindungsgemäße Elektronen emittierende Keramik weist weiter 0 bis maximal 10 Vol.-% herstellungsbedingte Verunreinigungen, Dotierungen, Hilfsstoffe und/oder Zusätze auf.

Solche herstellungsbedingten Verunreinigungen, Dotierungen, Hilfsstoffe und/oder Zusätze können Erdalkalielemente, wie Sr und/oder Ba sein.

Von weiterer erfindungsgemäßer Bedeutung ist es, dass die erfindungsgemäße Elektronen emittierende Keramik einen möglichst geringen Anteil an Metallen aufweisen soll, wobei jedoch eine für die jeweilige Anwendung notwendige Wärmeleitfähigkeit und erhöhte elektrische Leitfähigkeit durch die Metalle realisiert werden soll. Daher wird die Zusammensetzung der erfindungsgemäßen Elektronen emittierenden Keramik immer ausgehend von dem für die jeweilige Anwendung notwendigen Anteil an Metallen und von den für die Herstellung notwendigen Verunreinigungen, Dotierungen, Hilfsstoffen und/oder Zusätzen immer mit dem notwendigen Anteil an der Verbindung [Ca₂₄Al₂₈O₆₄]⁴⁺(4e⁻) (genannt C12A7-Elektrid) zu 100 Vol.-% ergänzt.

Ausgehend von der erfindungsgemäßen Zusammensetzung der Elektronen emittierenden Keramik ist deutlich, dass die erfindungsgemäße Elektronen emittierende Keramik ein Verbundwerkstoff oder Kompositwerkstoff ist, der aus mindestens zwei Materialkomponenten besteht, wobei der erfindungsgemäße Verbund- oder Kompositwerkstoff einige verbesserte Eigenschaften im Hinblick auf einige Eigenschaften der mindestens zwei Materialkomponenten aufweist.

Weiter weist die erfindungsgemäße Elektronen emittierende Keramik eine Dichte von mindestens 85 % der theoretischen Dichte der Keramik auf.

Vorteilhafterweise beträgt die Dichte der Keramik > 95 % der theoretischen Dichte der Keramik.

Auch bezüglich der Dichte, sowohl der tatsächlichen als auch der theoretischen Dichte, beziehen sich die Angaben auf im Rahmen der vorliegenden Erfindung auf die Dichte der gesamten erfindungsgemäßen Elektronen emittierenden Keramik, die aus der Verbindung [Ca₂₄Al₂₈O₆₄]⁴⁺(4e⁻) (genannt C12A7-Elektrid)und aus den Metallen und möglicherweise aus herstellungsbedingten Verunreinigungen, Dotierungen, Hilfsstoffen und/oder Zusätzen besteht.

Die erfindungsgemäße Elektronen emittierende Keramik weist eine geringe Austrittsarbeit von beispielsweise < 2.8 eV auf und dabei gleichzeitig eine sehr gute elektrische Leitfähigkeit für Elektronen auf. Ebenso weist diese Keramik eine erhöhte Temperaturleitfähigkeit gegenüber den bekannten Elektronen emittierenden Keramiken auf, wodurch ein kontinuierlicher Betrieb der Anlagen mit der erfindungsgemäßen Keramik bei niedrigeren Temperaturen realisiert werden kann.

Beispielsweise kann die erfindungsgemäße Elektronen emittierende Keramik als Hohlzylinder hergestellt sowie in einer Hohlkathode verbaut werden und als hocheffizienter Elektronenemitter arbeiten. Dafür strömt ein Treibstoffgas, wie Xenon oder Krypton oder Argon oder Helium oder andere Gase direkt in die Hohlkathode und eine Spannung zwischen der Kathode und einer Lochelektrode davor entzündet ein Plasma. Dies führt zu einem inneren Aufheizen des Kathodenmaterials und gleichzeitig zur Reinigung der Keramikoberfläche, was für eine effiziente Elektronenemission notwendig ist. Gleichzeitig führt dies zu einem direkten Kontakt des Plasmas in der Kathode mit dem Umgebungsplasma, z.B. durch ein Ionentriebwerk oder der Umgebung im niedrigen Erdorbit, wodurch Raumladungseffekte überwunden und somit hohe Ströme realisiert werden können.

Durch die erfindungsgemäße Elektronen emittierende Keramik wird ebenfalls die elektrische Leitfähigkeit durch den metallischen Leitpfad am Interface zwischen Keramik-Metall deutlich verbessert.

Ebenso wird durch die erfindungsgemäße Elektronen emittierende Keramik ein Material insbesondere für Kathoden bereitgestellt, welche andere als im Stand der Technik bekannte und verbesserte Materialeigenschaften als Elektronenemitter aufweist.

Dabei ist von besonderer Bedeutung, dass die positiven Eigenschaften von reinen Elektriden, welche unter anderem in einer kontinuierlichen Elektronenemission, einer niedrigen Austrittsarbeit, einer hohen chemischen Stabilität und einer hohen Reaktivität bestehen, die insbesondere auch bei sehr tiefen Temperaturen um den absoluten Nullpunkt und meist bis -40 °C vorhanden sind, bei der erfindungsgemäßen Lösung möglichst vollständig erhalten werden. Dies wird erfindungsgemäß dadurch gewährleistet, dass in der erfindungsgemäßen Elektronen emittierenden Keramik ein möglichst hoher Anteil an der Verbindung [Ca₂₄Al₂₈O₆₄]⁴⁺(4e⁻) (genannt C12A7-Elektrid)vorhanden ist.

Gleichzeitig werden aber die eher negativen Eigenschaften von reinen Elektriden, wie ihre schlechte Wärmeleitfähigkeit, ihre Sprödigkeit und ihren fehlenden ohmschen Kontakt mit Metallen, mit der erfindungsgemäßen Lösung deutlich verbessert. Dies wird mit einem möglichst geringen Anteil an Metallen zwischen > 0 und < 30 Vol.-% erreicht. Mit einem derart geringen Anteil an Metallen wird in der Regel die Perkolationsgrenze der Metalle in der erfindungsgemäßen Elektronen emittierenden Keramik überschritten und damit ein Perkolationsnetzwerk ausgebildet, was insbesondere zur Verbesserung der Temperaturleitfähigkeit, der elektrischen Leitfähigkeit und der Langzeitstabilität bei gleichzeitig kontinuierlicher Elektronenemission der erfindungsgemäßen Elektronen emittierenden Keramik führt.

Ein weiterer Vorteil der erfindungsgemäßen Elektronen emittierenden Keramik besteht darin, dass keine Heizelemente oder Filamente für die Zündung eines Plasmas und für den Betrieb der Kathode benötigt werden.

Die Forschungsarbeiten, die zu diesen Ergebnissen geführt haben, wurden von der Europäischen Union gefördert.

Nachfolgend wird die Erfindung an mehreren Ausführungsbeispielen näher erläutert.

### Beispiel 1

CaCO₃- und Al₂O₃-Pulver werden im Stoffmengenverhältnis von 12 zu 7 gemischt und bei einer Temperatur von 1450 °C aufgeschmolzen. Die Schmelze wird auf einem Messingblock abgeschreckt und in einer Scheibenschwingmühle und mittels Nassmahlung zerkleinert. Während der Nassmahlung werden 29,9 Ma.-% Mo-Pulver, entspricht 10 Vol.-% Mo-Pulver, zugegeben und die Mischung weiter homogenisiert. Anschließend wird das Mahlgut getrocknet und das erhaltene Pulver in zylindrische Scheiben gepresst. Die Scheiben werden unter Stickstoffatmosphäre in einem Ofen mit Graphitheizer bei 1350 °C mit einer Haltezeit von 10 h gesintert.

Die erhaltene Elektronen emittierende Keramik weist eine Dichte von > 95 % der theoretischen Dichte auf und kann nach einer trockenen Politur direkt als Kathode für einen Elektronenemitter eingesetzt werden.

Zur Ermittlung der Austrittsarbeit des Kathodenmaterials wird dieses im Vakuum bei 10⁻⁶ Pa auf eine Temperatur von 300 °C bis 950 °C erhitzt und der Strom gemessen, der durch die austretenden Elektronen auf eine gegenüberliegende Platte fließt, bei einem maximalen elektrischen Feld von 40 V/cm. Die ermittelte Austrittsarbeit betrug 2,4-2,8 eV bei einer Messtemperatur von mindestens 800 °C.

Die Temperaturleitfähigkeit der Keramik betrug 1,5 mm²/s (25 °C) und 1,1 mm²/s (300 °C).

Bei Einsatz der Keramik als Kathodenmaterial in einer Hohlkathode in einem Satellitenantrieb konnte eine Verbesserung der Langzeitstabilität bei gleichzeitig kontinuierlicher Elektronenemission festgestellt werden.

### Beispiel 2

CaCO₃-, SrCO₃- und Al₂O₃-Pulver werden im Stoffmengenverhältnis CaO:SrO:Al₂O₃ von 11,5:0,5:7 gemischt und bei einer Temperatur von 1450 °C aufgeschmolzen. Die Schmelze wird auf einem Messingblock abgeschreckt und in einer Scheibenschwingmühle und mittels Nassmahlung zerkleinert. Während der Nassmahlung werden 65 Ma.-% W-Pulver, entspricht 20 Vol,-% W-Pulver, zugegeben und die Mischung weiter homogenisiert.

Anschließend wird das Mahlgut getrocknet und das erhaltene Pulver in zylindrische Scheiben gepresst. Die Scheiben werden unter Stickstoffatmosphäre in einem Ofen mit Graphitheizer bei 1350 °C mit einer Haltezeit von 10 h gesintert.

Die erhaltene Elektronen emittierende Keramik enthält damit als Dotierung etwa 3,4 Ma.-% SrO und weist eine Dichte von 98 % der theoretischen Dichte auf und kann nach einer trockenen Politur direkt als Kathode für einen Elektronenemitter eingesetzt werden.

Zur Ermittlung der Austrittsarbeit des Kathodenmaterials wird dieses im Vakuum bei 10⁻⁶ Pa auf eine Temperatur von 300 °C bis 950 °C erhitzt und der Strom gemessen, der durch die austretenden Elektronen auf eine gegenüberliegende Platte fließt, bei einem maximalen elektrischen Feld von 40 V/cm. Die ermittelte Austrittsarbeit betrug 2,5 eV bei einer Messtemperatur von mindestens 800 °C.

Die Temperaturleitfähigkeit der Keramik betrug 2,5 mm²/s (25 °C) und 1,9 mm²/s (300 °C).

Bei Einsatz der Keramik als Kathodenmaterial in einem Satellitenantrieb konnte eine Verbesserung der Langzeitstabilität bei gleichzeitig kontinuierlicher Elektronenemission festgestellt werden.

### Beispiel 3

CaCO₃- und Al₂O₃-Pulver werden im Stoffmengenverhältnis von 12 zu 7 gemischt und bei einer Temperatur von 1450 °C aufgeschmolzen. Die Schmelze wird auf einem Messingblock abgeschreckt und in einer Scheibenschwingmühle und mittels Nassmahlung zerkleinert. Während der Nassmahlung werden 17 Ma.-% Ti-15Mo-Legierungspulver, entspricht 10 Vol.-% Ti-15Mo-Legierungspulver, zugegeben und die Mischung weiter homogenisiert. Anschließend wird das Mahlgut getrocknet und das erhaltene Pulver in Zylindern mit 20 mm Länge gepresst. Mittels trockener Grünbearbeitung werden aus den Zylindern Hohlzylinder mit Außendurchmesser von 4,5 mm und einem Innendurchmesser von 1 mm gefertigt. Die Hohlzylinder werden unter Stickstoffatmosphäre in einem Ofen mit Graphitheizer bei 1350 °C mit einer Haltezeit von 10 h gesintert.

Die erhaltene Elektronen emittierende Keramik weist eine Dichte von > 95 % der theoretischen Dichte auf.

Für die Erzeugung eines elektrischen Plasmas wird einer der keramischen Hohlzylinder in einer Hohlkathode verbaut. Die Hohlkathode besteht im Wesentlichen aus dem Hohlzylinder-Insert, einer Halterung, einem Gasanschluss, einem Isolator und einem Keeper. Die Hohlkathode wird mit einem Hall-Effekt-Triebwerk in einer Hoch-Vakuumkammer positioniert.

Für den Betrieb der Kathode wird Kryptongas durch die Kathode und damit den Hohlzylinder geleitet. Durch die Aufbringung eines Potentialunterschiedes zwischen dem Hohlzylinderemitter und dem Keeper wird ein Plasmazustand in der Kathode angeregt, wobei sich ein Plasma entzündet. Durch die Aufbringung eines positiven Potentiales an der Anode des Hall-Effekt-Triebwerkes wird das Plasmatriebwerk gezündet und betrieben.

Bei dem Betrieb der Hohlkathode wird eine Temperatur nahe des Elektronen emittierenden Hohlzylinderkörpers von etwa 150°C erzielt, was wesentlich geringer als bei herkömmlichen Elektronen emittierenden Materialien ist.

Bei Einsatz der Keramik als Hohlkathode in einem Satellitenantrieb konnte eine verringerte Temperatur der Elektronenquelle bei gleichzeitig kontinuierlicher Plasmaerzeugung festgestellt werden.

## Patentansprüche

1. Elektronen emittierende Keramik, die mindestens > 70 Vol-% der Verbindung [Ca₂₄Al₂₈O₆₄]⁴⁺(4e⁻) (genannt C12A7-Elektrid) und einen Anteil an Zr, Hf, V, Nb, Ta, Cr, Mo, W, Mn, Re, Fe, Ru, Os, Ni, Pd, Pt, Cu, Ag, Au, Zn, Cd, In, Sn, Sb, Te, TI, Pb oder Bi als Metall einzeln oder als Mischung oder Verbindung oder Legierung dieser Metalle untereinander und/oder mit Ti enthält, wobei der Anteil an den Metallen zwischen > 0 und < 30 Vol.-% liegt, und die Keramik eine Dichte von mindestens 85 % der theoretischen Dichte der Keramik aufweist und die Keramik 0 bis maximal 10 Vol.-% herstellungsbedingte Verunreinigungen, Dotierungen, Hilfsstoffe und/oder Zusätze enthält.

2. Elektronen emittierende Keramik nach Anspruch 1, bei der 70 bis 90 Vol-%, vorteilhafterweise 75 bis 90 Vol-%, der Verbindung [Ca₂₄Al₂₈O₆₄]⁴⁺(4e⁻) (genannt C12A7-Elektrid) in der Keramik vorhanden ist.

3. Elektronen emittierende Keramik nach Anspruch 1, bei der 5 bis < 30 Vol.-%, vorteilhafterweise 5 bis 20 Vol.-%, noch vorteilhafterweise 10 bis 15 Vol.-%, an Metallen vorhanden ist.

4. Elektronen emittierende Keramik nach Anspruch 1, bei dem ein Perkolationsnetzwerk der Metalle ausgebildet ist.

5. Elektronen emittierende Keramik nach Anspruch 1, bei der die Dichte der Keramik > 95 % der theoretischen Dichte der Keramik beträgt.

6. Elektronen emittierende Keramik nach Anspruch 1, bei der als Metall inerte Metalle, vorteilhafterweise Mo, W, Nb, Ta, Re, Au, Pt, Pd. vorhanden sind.

7. Elektronen emittierende Keramik nach Anspruch 1, bei der als Metall einzelne Metalle oder Legierungen von Metallen vorhanden sind.

8. Elektronen emittierende Keramik nach Anspruch 1, bei der als herstellungsbedingte Verunreinigungen, Dotierungen, Hilfsstoffe und/oder Zusätze Erdalkalielemente, wie Sr und/oder Ba vorhanden sind.

## Claims

1. Electron-emitting ceramic containing at least > 70 % by volume of the compound [Ca24Al28O64]4+(4e-)(called C12A7-electride) and a proportion of Zr, Hf, V, Nb, Ta, Cr, Mo, W, Mn, Re, Fe, Ru, Os, Ni, Pd, Pt, Cu, Ag, Au, Zn, Cd, In, Sn, Sb, Te, Tl, Pb or Bi as a metal individually or as a mixture or compound or alloy of these metals with one another and/or with Ti, wherein the proportion of the metals is between > 0 and < 30 vol. - %, and the ceramic has a density of at least 85 % of the theoretical density of the ceramic and the ceramic contains 0 to a maximum of 10 % by volume of production-related impurities, dopants, auxiliary materials and/or additives.

2. The electron-emitting ceramic according to claim 1, in which 70 to 90 % by volume, advantageously 75 to 90 % by volume, of the compound [Ca₂₄Al₂₈O₆₄]⁴⁺(4e⁻) (referred to as C12A7-electride) is present in the ceramic.

3. Electron-emitting ceramic according to claim 1, in which 5 to < 30 % by volume, advantageously 5 to 20 % by volume, even more advantageously 10 to 15 % by volume, of metals are present.

4. Electron-emitting ceramic according to claim 1, in which a percolation network of the metals is formed.

5. The electron-emitting ceramic according to claim 1, in which the density of the ceramic is > 95 % of the theoretical density of the ceramic.

6. The electron-emitting ceramic according to claim 1, in which inert metals, advantageously Mo, W, Nb, Ta, Re, Au, Pt, Pd, are present as the metal.

7. Electron-emitting ceramic according to claim 1, in which individual metals or alloys of metals are present as the metal.

8. Electron-emitting ceramic according to claim 1, in which alkaline earth elements, such as Sr and/or Ba, are present as production-related impurities, dopants, auxiliary materials and/or additives.

## Revendications

1. Céramique émettrice d'électrons contenant au moins > 70 % en volume du composé [Ca24Al28O64]4+(4e-) (appelé électrode C12A7) et une proportion de Zr, Hf, V, Nb, Ta, Cr, Mo, W, Mn, Re, Fe, Ru, Os, Ni, Pd, Pt, Cu, Ag, Au, Zn, Cd, In, Sn, Sb, Te, TI, Pb ou Bi en tant que métal seul ou en tant que mélange ou combinaison ou alliage de ces métaux entre eux et/ou avec Ti, la proportion des métaux étant comprise entre > 0 et < 30 % en volume, et la céramique présente une densité d'au moins 85 % de la densité théorique de la céramique et la céramique contient de 0 à 10 % en volume maximum d'impuretés, de dopants, d'adjuvants et/ou d'additifs liés à la fabrication.

2. Céramique émettrice d'électrons selon la revendication 1, dans laquelle de 70 à 90 % en volume, avantageusement de 75 à 90 % en volume, du composé [Ca₂₄Al₂₈O₆₄]⁴⁺(4e⁻) (appelé l'électrode C12A7) est présent dans la céramique.

3. Céramique émettrice d'électrons selon la revendication 1, dans laquelle 5 à < 30 % en volume, avantageusement 5 à 20 % en volume, encore avantageusement 10 à 15 % en volume, de métaux sont présents.

4. Céramique émettrice d'électrons selon la revendication 1, dans laquelle un réseau de percolation des métaux est formé.

5. Céramique émettrice d'électrons selon la revendication 1, dans laquelle la densité de la céramique est > 95 % de la densité théorique de la céramique.

6. Céramique émettrice d'électrons selon la revendication 1, dans laquelle des métaux inertes, avantageusement Mo, W, Nb, Ta, Re, Au, Pt, Pd. sont présents comme métal.

7. Céramique émettrice d'électrons selon la revendication 1, dans laquelle des métaux individuels ou des alliages de métaux sont présents comme métal.

8. Céramique émettrice d'électrons selon la revendication 1, dans laquelle des éléments alcalino-terreux, tels que Sr et/ou Ba, sont présents en tant qu'impuretés, dopages, adjuvants et/ou additifs liés à la fabrication.
